# EUROPEAN PATENT APPLICATION

(11) **EP 1 971 124 A2**
(43) Date of publication of application: **17.09.2008**
(21) Application number: 08152360.7
(22) Date of filing: 06.03.2008
(51) Int. Cl.: H04N 1/00

(54) **Original sheet support means in a scanner**

(30) Priority: 16.03.2007 US 907003 P
(71) Applicant: Océ-Technologies B.V., 5914 CC Venlo (NL)
(72) Inventor: Rijniers, Lourens A., 5913 RX Venlo (NL); Verhofstad, Wilhelmus J.E.G., 5821 EA Vierlingsbeek (NL)
(74) Representative: van de Sande, Jacobus

(57) **Abstract**

The invention relates to a wide format transport scanner provided with a drawer for holding a set of wide format original sheets to be scanned in. The drawer is located just underneath the entry nip of the scanner. After placing a set of wide format originals on the drawer, the task of manually scanning a whole set of wide format originals one after another is facilitated to a great extent.

## Description

### FIELD OF THE INVENTION

The invention relates to, in a transport scanning system, an original sheet holder for holding a set of original sheets for manually inserting one sheet at a time for scanning.

### BACKGROUND OF THE INVENTION

A transport scanner, also named feed through scanner, is a type of scanner, where an original is transported along a transport path through the scanning device, passing an input nip and further passing along an optosensitive array, mounted in the device fixedly and transversely with respect to the transport direction of the original. This in contrast with e.g. a flat bed scanner where the original is positioned fixedly on a platen and the optosensitive array will move relative to the platen.

Transport scanners are well suited for scanning wide format originals. In particular, but not by way of limitation, the original may have an appreciable size such as an A0 or A1 format, and may even stretch out in one direction, such as in the form of a semi-infinite roll. Since only in one dimension the large format has to be accommodated the size of the device remains modest. There are no restrictions for the other dimension. On the other hand, an original sheet may also have quite a smaller size, which can also be accommodated.

Dependent on the position of the optosensitive array a scanner may scan face up or face down. Is the array positioned under the transport path the down side of the original sheet will be scanned by the array; an original sheet has to be entered face down: the scanner will scan face down. Is the array positioned above the transport path the scanner will scan the upward face of the original sheet; the original sheet has to be entered face up: the scanner will scan face up. An advantage of a face up scanner is that an operator can see the image on the original during entering of the sheet and so is able to check whether or not an original is a misprint, an original is failing (in case of numbered originals) and whether or not an original has the right orientation for correct folder output. A disadvantage of a face up scanner is that the original set is delivered in the original delivery tray face up as well. If the operator started with the first original, the original set will be delivered in the wrong order in the original delivery tray. Many operators therefore start with a set upside down and rotate the original while putting it in the scanner.

Typical set sizes of originals to be scanned are 50-200 originals. No automatic document feeders exist for these formats. Moreover wide format originals pose their own particular problems in the sense that these originals are not easy to handle by an operator. Most of the time, on a table besides the scanning device, a pile of original sheets to be scanned is available. During scanning of the set the operator continuously has to pick one original from the table. This is either walking or rotating his body towards the table back and forth. Above that, at the scanner, the drawing has to be positioned properly against the input nip for pulling in and further transport along the optosensitive array. This has to be done accurately to prevent skewing. With a sheet as large as an A0 unfolded in both hands without support, this is a cumbersome operation.

### SUMMARY OF THE INVENTION

To provide an operator with better support for manually scanning wide format originals, in a transport scanning system, the holder according to the preamble is positioned in such a way that leading edges of the original sheets on the holder are parallel to and in direct vicinity of an entry nip of the scanning system and are directly accessible for an operator.

Once the pile or set is placed on the original sheet holder, the operator can take the upper sheet of the set and position it against the input nip with an easy movement, where after it, after a short delay, will be pulled in by the entry nip. There is no longer a need for the operator to rotate his body back and forth each time for picking an original sheet for scanning. The original sheet holder provides the operator with a more ergonomic working place.

Furthermore, during the positioning of the original sheet against the input nip, the sheet will be still supported by the holder. So it will be easier to position the sheet in an accurate manner, since not the whole sheet is hanging free without control and the weight of the sheet is not pulling against the subtle manual position movements needed to align with the input nip.

According to an embodiment the original sheet holder is positioned underneath the entry nip of the scanner. In case the scanner is of the face down type such an embodiment will combine advantages of both face up and face down scanner types.

The footprint of the device remains small if the original sheet holder is positioned above or beneath the original sheet entry and substantially within the footprint of the scanning device.

### BRIEF DESCRIPTION OF THE DRAWINGS

These and further aspects and advantages of the invention will be discussed more in detail hereinafter with reference to the disclosure of preferred embodiments, and in particular with reference to the appended figures that show:
Figure 1, a schematic cross section of a transport scanner according to a first embodiment;
Figure 2, a schematic cross section of a transport scanner according to a first embodiment with the drawer in outward position;
Figure 3, a schematic cross section of a transport scanner according to a first embodiment with a set of originals for scanning;
Figure 4, a schematic cross section of a transport scanner according to a second embodiment; and
Figure 5, a schematic cross section of a transport scanner according to a third embodiment.

### EMBODIMENTS

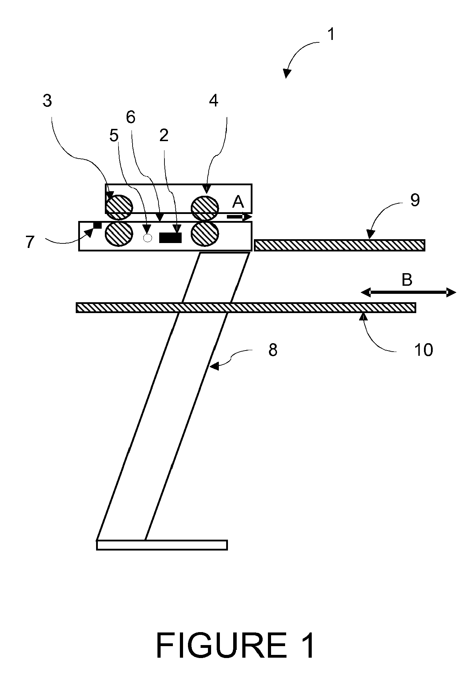

Figure 1 shows a schematic cross section of a transport scanning system 1 according to a first embodiment. The scanning system 1 comprises an optosensitive array 2, two pairs of transport rollers 3 and 4 for transporting an original sheet in the transport direction indicated with arrow A, pair 3 forming the input nip, a light source 5, a platen 6 for guiding the original sheet along the optosensitive array, a sheet sensor 7 for sensing a sheet and two stands whereof only one, 8, is shown in the figure.

In operation, when a sheet is positioned against the entry nip by an operator, the sheet sensor switches to an ON state, whereupon the roller pair 3, after a short delay, makes a part of a turn in such a way that the sheet is pulled in over a short distance. This will effectively free the hands of the operator. Further settings if needed can still be made then. After activation of the start button, the original sheet is transported along the platen and the optosensitive array and will be further transported by the pair of transport rollers 4 and delivered on original delivery tray 9. When a next document is positioned against the input nip within a certain time interval there is no need to activate the start button again: the original sheet will be pulled in for scanning automatically. In this way scanning of a whole set of original sheets is accommodated.

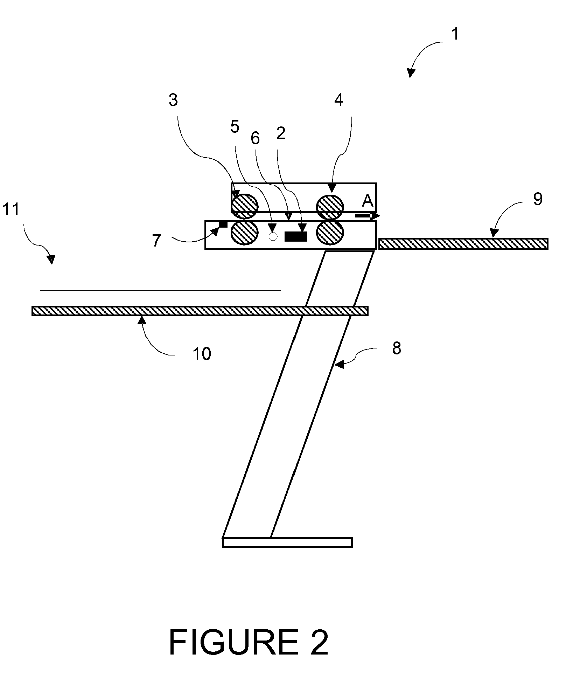

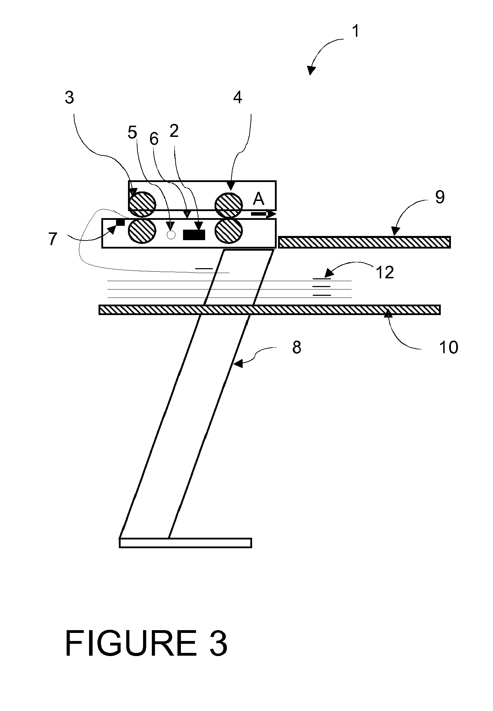

In this first embodiment of the invention the support means are implemented as a drawer 10 slidable in a horizontal plane indicated with arrow B. The drawer is moved forward to enable the operator to put the set of originals 11 to be copied or to be scanned on it. This is illustrated in Fig. 2. The configuration of the scanner shown in the figure is a face down scanning device. In this case it is advantageous to place the set face up. The drawer is moved backwards so that the leading edges of the original sheets are substantially in the direct vicinity of the input nip. The operator takes the upper one sheet of the set of original sheets. The image and the orientation of each original is visible for the operator then. The operator bends the sheet to position the leading edge against the entry nip of the scanning device. The sheet will be pulled in, scanned and fed through. This situation is illustrated in Fig.3. The image side of an original sheet is indicated with reference number 12. Taking each time the uppermost sheet from the pile of originals the set is scanned in in the right order and delivered in the original delivery tray in the right order as well.

Consideration of this embodiment and the way an operator is able to work with it, reveals, in case that originals are placed face up on the support means, that before scanning, the image is visible and can be checked and that the set is delivered in the right order in the original delivery tray. There is no need to re-order the original set afterwards or to rotate the set.

This shows that the above configuration according to the invention combines the advantages of a face up scanner with the advantages of a face down scanner. Furthermore due to the support means according to the invention the operator can pick the upper sheet of the set and put it in the scanner with an easy movement. The operator has no longer to rotate his body. This provides a more ergonomic working place.

The original sheet support means according to the invention can also be used with a face up scanner. However in case the support means are positioned underneath the scanner, as is the case in the first embodiment, the set of originals has to be put on the sheet support means turned downwards, in order to get the images scanned and delivered in the right order.

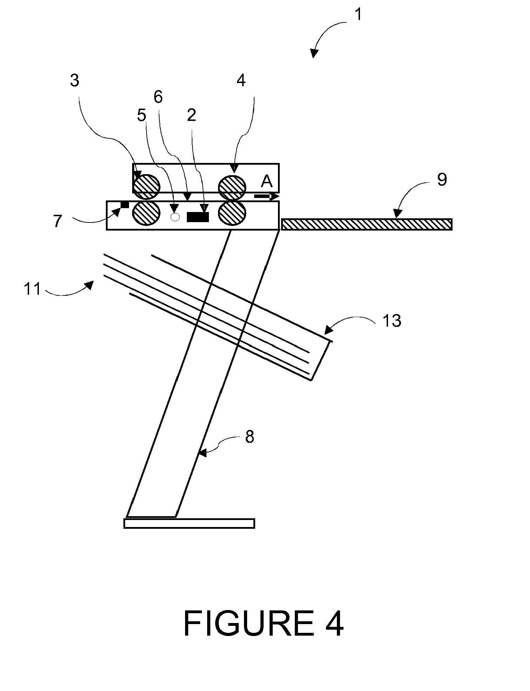

Fig. 4 shows a schematic cross sectional view of an alternative embodiment of the original sheet support means. In this embodiment it takes the form of a tilted container 13, suited to receive unfolded original sheets.

In next exemplary embodiments the scanning system comprises disjoined components.

In a first exemplary embodiment the stand is disjoined from the scanning device (table top device). In this case the original sheet holder according to the invention is a third disjoined component, that takes the form of a drawer enclosed in a frame or box, at least open at the front side, resting on the stand and upon which the scanning device is placed.

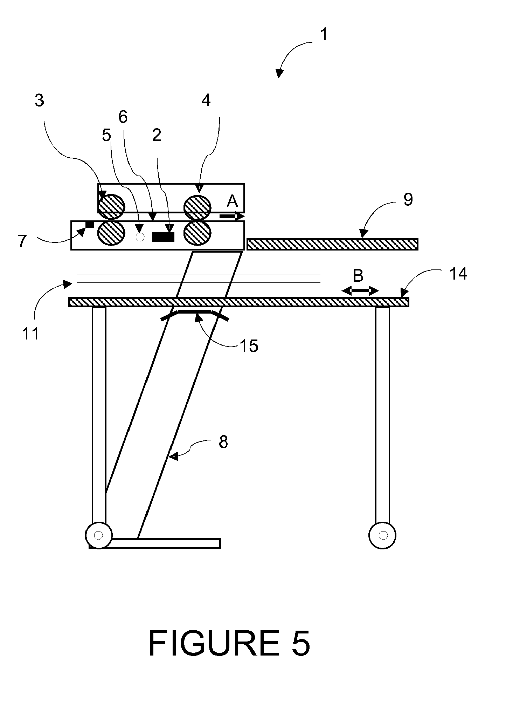

In a further exemplary embodiment the original sheet holder is provided as a movable table. This is illustrated in Fig. 5. According to the invention the table 14 is provided with a guide and snap mechanism cooperating with counter parts 15 at the scanner for accurately positioning of the table with respect to the scanner. Preferably the height of the table surface is adjustable.

The above disclosures present preferred embodiments of the present invention to which persons skilled in the art will recognize many amendments and variations; and in consequence the scope of the present invention should be considered to be limited only by the appended claims.

## Claims

1. In a transport scanning system an original sheet holder for holding a set of original sheets for manually inserting one sheet at a time for scanning, the holder positioned in such a way that leading edges of the original sheets on the holder are parallel to and in direct vicinity of an entry nip of the scanner and are directly accessible for an operator.

2. The original sheet holder according to claim 1, where the holder is a drawer slidable in a horizontal plane.

3. The original sheet holder according to any of claim 1 or 2, where the original sheet holder is positioned underneath the entry nip of the scanner.

4. The original sheet holder according to claim 1, where the holder is an upper surface of a movable table, the table comprising a guiding mechanism cooperating with a guiding mechanism at the scanner for accurately positioning the table underneath the scanner.
